# EUROPEAN PATENT SPECIFICATION

(11) **EP 2 429 961 B1**
(45) Date of publication and mention of the grant of the patent: **01.03.2017**
(21) Application number: 10775517.5
(22) Date of filing: 13.05.2010
(51) Int. Cl.: B23K 103/00, B28D 1/22, C03B 33/095, B23K 26/40

(54) **METHODS FOR CUTTING A FRAGILE MATERIAL**
VERFAHREN ZUM SCHNEIDEN EINES BRÜCHIGEN MATERIALS
PROCÉDÉS POUR LA COUPE D'UN MATÉRIAU FRAGILE

(30) Priority: 13.05.2009 EP 09305427
(43) Date of publication of application: 21.03.2012
(73) Proprietor: Corning Incorporated, Corning, NY 14831 (US)
(72) Inventor: DANNOUX, Thierry L, F-77210 Avon (FR); LEHUEDE, Philippe, F-91330 Yerres (FR)
(74) Representative: Anderson, James Edward George
(86) International application number: PCT/US2010/034663
(87) International publication number: WO 2010/132637

(56) References cited:
- WO-A1-2004/087390
- WO-A1-2009/057558
- JP-A- H07 328 781
- JP-A- 2003 001 457
- JP-A- 2004 276 386
- JP-A- 2006 137 168
- JP-A- 2007 105 888
- JP-A- 2008 049 498
- JP-A- 2008 049 498
- US-A- 5 254 833
- US-A1- 2007 228 100

## Description

### FIELD

The present invention relates generally to methods for cutting, and more particularly, to methods for cutting a fragile material.

### BACKGROUND

Formation of glass sheets is desirable for various applications. After initial formation, glass sheets frequently need to be cut apart to obtain a final glass product having the desired peripheral shape and edge characteristics. There is a need to provide cutting techniques for fragile material to provide convenient separation while presenting edges having favorable characteristics.

U.S. Patent Publication No. 2007/0228100 discloses a method and apparatus for forming cracks in substrates made of brittle material by heating and cooling. A laser beam having an elliptical beam spot is irradiated onto a substrate made of a brittle material along with a cooling spot formed by the emission of a jet of refrigerant. A thermal strain is locally generated due to the heating and cooling, and as a result, a vertical crack is formed in the substrate. The beam spot is moved relative to the substrate so that a beam travel line, which is the track of the major axis center of the beam spot moving in an oblique direction to the reference axis direction, is fixed to be coincident with the major axis direction of the beam spot. The cooling spot is moved relative to the substrate to follow the beam spot position separated from the beam travel line by an offset amount (crack formation presumed line). As a result, a crack is formed following the crack formation presumed line.

Japanese Patent Application No. JP 2008049498 (A) discloses an apparatus and method for separating a substrate formed from fragile material by locally heating and cooling the substrate along a division line. The method includes heating the substrate along the division line with a heating part, such as a laser, followed by cooling the substrate along or adjacent to the division line with a cooling part which directs a cooling fluid onto the substrate. A distance control mechanism is used to adjust the distance between cooling and the heating.

WO 2009/057558 discloses a laser processing method for introducing a cut starting point in a GaAs substrate.

U.S. Patent No. 5,254,833 discloses an apparatus for cleavage-cutting a brittle material. The apparatus includes a beam scanning device for deflecting a laser beam from a laser source onto a brittle material such that the laser beam is scanned along a planned cleavage-cutting line which coincides with a groove formed in the brittle material.

Japanese Patent Application No. JP 2003001457 (A) discloses a laser beam machining method which is capable of cutting an object for machining without the occurrence of melting the workpiece or a crack deviating from a planned cutting line on the surface of the object being machined.

### SUMMARY

In one example aspect, a method for cutting a fragile material is provided. The method includes the step of heating the fragile material along a separation path to separate the fragile material into a first portion and a second portion. At least the first portion includes a first thermal affected zone extending along the separation path. The method further includes the step of spontaneously splitting at least part of the first thermal affected zone from the remainder of the first portion along a first split path extending a first distance from the separation path. The spontaneous splitting occurs as a consequence of the step of heating the fragile material.

### BRIEF DESCRIPTION OF THE DRAWINGS

These and other features, aspects and advantages of the present disclosure are better understood when the following detailed description is read with reference to the accompanying drawings, in which:
**FIG. 1A** is a sectional view along line **1A**-**1A** of **FIG. 2****;**
**FIG. 1B** is a sectional view along line **1B-1B** of **FIG. 2****;**
**FIG. 1C** is a sectional view along line **1C-1C** of **FIG. 2****;**
**FIG. 2** is a top schematic view of a method according to one example; and
**FIG. 3** is a schematic view of one embodiment of a system for cutting a glass sheet from a glass bulb wherein the glass sheet includes a substantially clean edge.

### DETAILED DESCRIPTION

Methods will now be described more fully hereinafter with reference to the accompanying drawings in which example embodiments of the disclosure are shown. Whenever possible, the same reference numerals are used throughout the drawings to refer to the same or like parts. However, this disclosure may be embodied in many different forms and should not be construed as limited to the embodiments set forth herein.

Example methods herein involve fragile materials that are brittle with a low thickness. The fragile materials can have a wide range of thicknesses. For example, a thin glass can be used having a thickness **"T"** that is equal to or less than 150 µm, such as from about 5 µm to about 150 µm. In another example, a thin glass having a thickness **"T"** from about 20 µm to about 100 µm can be used, although other thicknesses may be incorporated with further examples.

Fragile materials may comprise glass such as transparent, translucent, colored, or other glass types. In a further example, fragile materials may comprise a polymer such as a composite including glass and a polymer. In further examples, the fragile material may comprise crystalline material such as a quartz composition, ceramic, or glass ceramic. Fragile materials may be used for a variety of applications. In one example, the fragile material may comprise a glass for a display assembly, such as a liquid crystal display or other display device. For instance, as shown, a fragile material **10** may be provided that includes a flexible glass material configured for use with flexible display applications. Such a flexible glass material may allow the displays to be rolled into a storage configuration and can allow the fragile material to process in an efficient manner. The fragile material can be constructed at a wide variety of shapes such as planar, cylindrical, conical, frustoconical shape, or other shapes.

The methods described herein include cutting the fragile material **10.** Examples of cutting can include initial scoring, etching, or complete cut through where each results in separating the fragile material **10.** Heating the fragile material **10** can be achieved using various techniques. For example, heating can be applied at substantially all locations along a path. Alternatively, the heating can be applied at spaced locations along the path. Still further, the heating application can be continuous or pulsed. For example, the heating application can comprise a pulsed or non-pulsed heat source applied at spaced locations or at substantially all locations along the path.

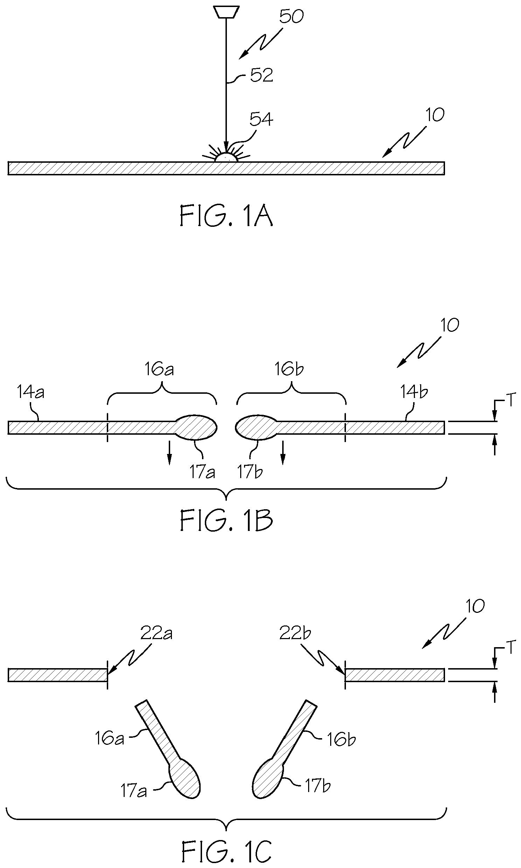

Various heat sources may be used to apply the heat to the fragile material **10.** For example, **FIG. 1A** illustrates a schematic view of a heating source **50** that may be used in accordance with examples of the disclosure. In one example, the heating source **50** may comprise an apparatus that can provide heat at the fragile material surface and cause desired internal stresses for creating a thermal affected zone discussed more fully below. For example, the heating source **50** may include a laser emitting at a wavelength between 10 µm and 11 µm, such as a CO₂ laser emitting at a 10.6 µm wavelength. However, other emission wavelengths may also be applied, depending on the optical absorption properties of the fragile material.

The heating source **50** and the fragile material **10** can be moved relative to one another during the step of heating. The relative movement can be achieved by a variety of configurations. For instance, the fragile material **10** can be fixed while the heating source **50** or a portion of the heating source (e.g. the heating beam **52** and heating spot **54**) moves along the direction of the separation path **12.** The portion of the heating source **50** can also comprise a mirror designed to control the direction of the heating beam **52** and hence the location of the heating spot **54.** Therefore, relative movement can be achieved by rotating or moving the mirror or other part of the heating source **50** relative to the fragile material **10.** Alternatively, the heating source **50** can be fixed while the fragile material **10** moves along the direction of the separation path **12.** As another example, both the heating source **50** (or a portion of the heating source) and the fragile material **10** can move at the same time such that the relative movement causes the heating beam **52** and heating spot **54** to move along the direction of the separation path **12.**

Alternatively, all or a plurality of desired portions along the separation path **12** can be heated simultaneously. For instance, a single or multiple heating sources can be used to simultaneously heat different areas along the separation path **12.** For example, a plurality of heating sources may be arranged to simultaneously heat different areas of the separation path **12** as the heating sources are moved relative to the fragile material **10.** In still further examples, a single or multiple heating sources can be used to simultaneously heat different areas of the separation path **12** without relative movement between the one or more heating sources and the fragile material **10.** For instance, rather than heating at a point, the heating device may be designed to simultaneously heat some or all desired portions along the separation path **12.** For instance, a laser array can simultaneously emit a series of beams that heats along a line, rather than a point, to simultaneously heat a segment or all desired portions of the separation path **12.**

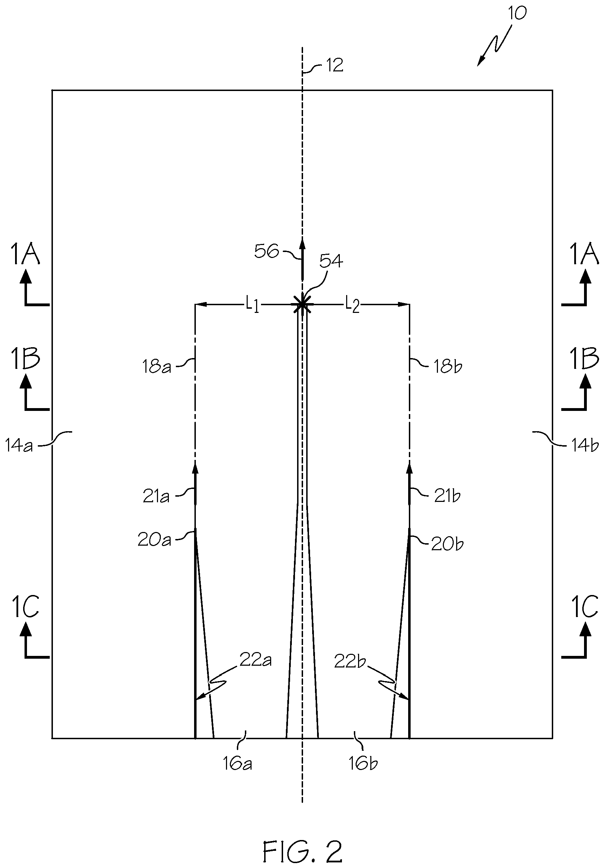

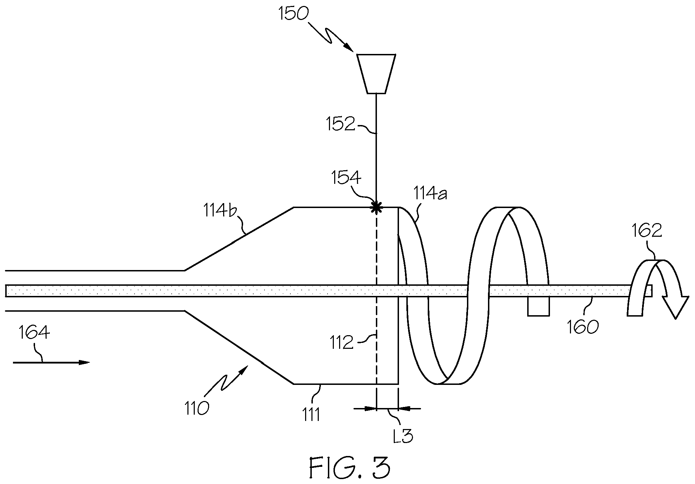

As shown in **FIG. 2****,** the fragile material **10** can be heated along a separation path **12** to separate the fragile material **10** into a first portion **14a** and a second portion **14b.** The separation path **12** can extend in two or three dimensions. For example, as shown in **FIG. 2****,** the separation path **12** can comprise a substantially straight line, although other path configurations may be incorporated in further examples. For instance, the separation path **12** may have curved segments, straight segments or other segment types that substantially extend in two dimensions along a planar surface of the fragile material **10.** In further examples, the separation path **12** can comprise a path that extends in three-dimensions. For example, as described more fully below with respect to **FIG. 3****,** a separation path **112** extends along a conically shaped fragile member **110.** Thus, the separation path **112** comprises a conical spiral, although paths with other shapes may be incorporated in further examples.

Heating the fragile material **10** along the separation path **12** is configured to provide internal stresses within the first portion **14a** sufficient to result in at least partial spontaneous splitting of at least part of a first thermal affected zone **16a** from the remainder of the first portion **14a** along a first split path **18a.** The first split path **18a** can extend along the separation path **12.** In one example, the first split path **18a** can have the same shape as the separation path **12.** For example, as shown in **FIG. 2****,** the first split path **18a** can be offset and parallel with respect to the separation path **12.** In a further example, the first split path **18a** may extend at an angle with respect to the separation path **12** and/or have a different shape than the separation path **12.** For example, the heating source **50** may provide varying heat treatments along the separation path **12** or the fragile material characteristics may differ along the separation path **12.** Varying the heat treatment may therefore be used to provide a first split path **18a** that has a different shape than the separation path **12.**

The step of heating can also be modified by changing a plurality of process parameters of the heating step to accommodate changes of a plurality of characteristics of the fragile material **10.** The plurality of characteristics of the fragile material **10** may include the thickness **"T"** of the fragile material **10** and the coefficient of thermal expansion of the fragile material **10.** The plurality of process parameters of the heating step may comprise the heating power and/or the relative movement between the fragile material **10** and the heating source **50.**

**FIGS. 1C** and **2** illustrate spontaneous splitting of at least part of the first thermal affected zone **16a** from the remainder of the first portion **14a** along the first split path **18a** extending a first distance **L₁** from the separation path **12.** The first distance **L₁** between the first split path **18a** and the separation path **12** is the width of the first thermal affected zone **16a.** As shown, the first distance **L₁** is about 1 mm, although other distances may be provided in further examples. As shown in **FIG. 2****,** the first distance **L₁** may be substantially constant along the separation path **12,** and the first split path **18a** may be substantially parallel to the separation path **12.** As discussed above, the first split path **18a** may not be parallel with the separation path **12.** In such examples, the first distance **L₁** may vary along the separation path **12** as a function of variations in attributes (properties) of the fragile material such as thickness, or process variables such as environmental conditions and/or cutting parameters (e.g. laser power). Consistency of **L₁**, and therefore straightness of the resulting edge, is therefore dependent on maintaining consistent process variables and/or attributes of the fragile material

The spontaneous splitting occurs as a consequence of the step of heating the fragile material **10.** Because of the thermal effect of the heating step, sufficient internal stresses are created within the first portion **14a** to facilitate spontaneous generation and/or propagation of a first crack **20a** along the first split path **18a.** In one example, the fragile material **10** may be weakened, such as by scoring, along the first split path **18a** to provide an initial crack location. Alternatively, as shown, weakening is not needed, wherein the first crack **20a** is formed during spontaneous splitting of the first thermal affected zone **16a** from the remainder of the first portion **14a.** As shown in **FIG. 2****,** the first crack **20a** can propagate along the first split path **18a** in a direction **21a** to cause the spontaneous splitting of at least part of the first thermal affected zone **16a** from the remainder of the first portion **14a** along the first split path **18a** as shown in **FIG. 2****.** The spontaneous splitting may happen, for example, shortly after heat treating. For instance, the spontaneous splitting may occur 3 seconds, 2 seconds, or 1 second after the step of heating.

As shown in **FIG. 1C**, the step of spontaneously splitting provides the first portion **14a** with a first clean edge **22a** extending along the first split path **18a.** The first clean edge **22a** can provide a substantially defect free edge portion with a reduced number of surface imperfections, such as cracks, pits, or other imperfections. Further, the clean edge has a thickness that is substantially the same as surrounding portions without internal stresses typically found in a bulbous end portion **17a** of the first thermal affected zone **16a.** As the first thermal affected zone **16a** has split off, the reminder of the first portion **14a** has a clean edge without bulbous end portion **17a,** cracks, or other imperfections.

Optionally, heating the fragile material **10** along the separation path **12** can also be configured to provide internal stresses within the second portion **14b** sufficient to result in at least partial spontaneous splitting of at least part of a second thermal affected zone **16b** from the remainder of the second portion **14b** along a second split path **18b.** The second split path **18b** can also extend along the separation path **12.** In one example, the second split path **18b** can have the same shape as the separation path **12.** In another example, the second split path **18b** can be offset from the separation path **12** and have the same shape as the separation path **12.** For example, as shown in **FIG. 2****,** the second split path **18b** can be offset and parallel with respect to the separation path **12.** In a further example, the second split path **18b** may extend at an angle with respect to the separation path **12** and/or have a different shape than the separation path **12.** For example, the heating source **50** may provide varying heat treatments along the separation path **12** or the fragile material characteristics may differ along the separation path **12.** Varying the heat treatment may therefore be used to provide a second split path **18b** that has a different shape than the separation path **12.**

**FIGS. 1C** and 2 illustrate spontaneous splitting of at least part of the second thermal affected zone **16b** from the remainder of the second portion **14b** along the second split path **18b** extending a second distance **L₂** from the separation path **12.** The second distance **L₂** between the second split path **18b** and the separation path **12** is the width of the second thermal affected zone **16b.** As shown, the second distance **L₂** is about 1 mm, although other distances may be provided in further examples. As shown in **FIG. 2****,** the second distance **L₂** may be substantially constant along the separation path **12,** and the second split path **18b** may be substantially parallel to the separation path **12.** As discussed above, the second split path **18b** may not be parallel with the separation path **12.** In such examples, the second distance **L₂** may vary along the separation path **12.** In one example, the first distance **L₁** may be substantially equal to the second distance **L₂** although different arrangements may be provided in further examples.

The spontaneous splitting occurs as a consequence of the step of heating the fragile material **10.** Because of the thermal effect of the heating step, sufficient internal stresses are created within the second portion **14b** to facilitate spontaneous generation and/or propagation of a second crack **20b** along the second split path **18b.** In one example, the fragile material **10** may be weakened, such as by scoring, along the second split path **18b** to provide an initial crack location. Alternatively, as shown, weakening is not needed, wherein the second crack **20b** is formed during spontaneous splitting of the second thermal affected zone **16b** from the remainder of the second portion **14b.** As shown in **FIG. 2****,** the second crack **20b** can propagate along the second split path **18b** in a direction **21b** to cause the spontaneous splitting of at least part of the second thermal affected zone **16b** from the remainder of the second portion **14b** along the second split path **18b** as shown in **FIG. 2****.** The spontaneous splitting may happen, for example, shortly after heat treating. For instance, the spontaneous splitting may occur 3 seconds, 2 seconds, or 1 second after the step of heating.

As shown in **FIG. 1C**, the step of spontaneously splitting provides the second portion **14b** with a second clean edge **22b** extending along the second split path **18b.** The second clean edge **22b** can provide a substantially defect free edge portion with a reduced number of surface imperfections, such as cracks, pits, or other imperfections. Further, the clean edge has a thickness that is substantially the same as surrounding portions without internal stresses typically found in a bulbous end portion **17b** of the second thermal affected zone **16b.** As the second thermal affected zone **16b** has split off, the reminder of the second portion **14b** has a clean edge without bulbous end portion **17b,** cracks, or other imperfections.

As mentioned previously the thickness **"T"** of the fragile material **10** can be equal to or less than 150 µm such that the internal stress due to the heating is sufficient to generate cracks all through the entire thickness of the fragile material **10.** As the cracks extend through the entire thickness of the fragile material **10,** the thermally affected zones can be spontaneously split from the remaining portions of the fragile material **10.** For instance, the fragile material **10** in this invention can comprise a thin glass with a thickness **"T"** that is from about 5 µm to about 150 µm in flexible display applications. The coefficient of thermal expansion can also be a noted characteristic of the fragile material **10** in the present invention. For instance, the fragile material **10** can comprise glass with a coefficient of thermal expansion from 10 to 70 x 10⁻⁷/K between 25-300 °C, for example, from 20 to 50 x 10⁻⁷/K between 25-300 °C.

Regarding the heating power and the moving speed of the heating step, an example is given with respect to the cutting of an ultra thin glass material using a CO₂ laser. The CO₂ laser power is from about 50 W to about 150 W during the step of heating while the glass heated at a speed from about 10 mm/s to about 300 mm/s along a direction of the separation path **12.** In one example, the glass is heated at a speed from about 20 mm/s to about 300 mm/s.

Experimental results regarding the relationship between the process parameters of the heating step (i.e. laser power and moving speed) and the characteristics of the glass (i.e. thickness) is summarized in Table 1 below. The thinner glass requires a faster moving speed of cutting for a given laser power. In Table 1, all cutting tests are done on Pyrex glass with a Synrad rf-excited CO₂ laser at a power of 80 W. The focal spot diameter of the laser is 131 µm, the laser beam diameter is 7.2 mm, and the focusing lens of the laser is 6.36 cm (2.5 inches) for all tests.

**TABLE 1**

| **Test** | **1** | **2** | **3** |
|---|---|---|---|
| **Glass thickness (µm)** | 120 | 100 | 70 |
| **Moving speed (mm/s)** | 25-30 | 35-40 | 40-45 |

An example method will now be described with respect to **FIG. 2****.** A heating source **50** can be moved in a direction **56** such that the heating spot **54** travels along the separation path **12.** As a result, the fragile material **10** is heated along the separation path **12** to separate the fragile material **10** into the first portion **14a** and the second portion **14b.** Due to the heating, the first portion **14a** includes the first thermal affected zone **16a** and the second portion **14b** includes the second thermal affected zone **16b.** At least part of the first thermal affected zone **16a** spontaneously splits from the remainder of the first portion **14a** by a first crack **20a** propagating along direction **21a.** Likewise, at least part of the second thermal affected zone **16b** spontaneously splits from the reminder of the second portion **14b** by a second crack **20b** propagating along direction **21b.**

Another example method is shown schematically in **FIG. 3****.** In this embodiment, the heating source **50** may be a CO₂ laser **150** positioned to cut a glass sheet **114a** with a clean edge from a glass bulb **114b** having cylindrical shaped portion **111** extending from a frustoconical shape root. The CO₂ laser **150** may be a 10.6 µm wavelength Synrad rf-excited CO₂ laser with a maximum power of 80 W and beam diameter of 7.2 mm. The laser beam **152** of the CO₂ laser **150** may be focused on the surface of the glass bulb **114b** with a 6.36 cm (2.5 inches) focusing lens to produce a focal spot **154** with the diameter of 131 µm. In order to cut glass having a thickness of up to about 150 µm, the power of the CO₂ laser **150** may be from about 50 W to about 80 W.

The glass bulb **114b** may be Pyrex glass bulb with a cylindrical shaped portion **111** as shown in **FIG. 3****.** The thickness of the glass bulb **114b** may be from about 60 µm to about 100 µm. The glass bulb **114b** can be attached to a rod **160** that continuously rotates in a direction as indicated by arrow **162.** The glass bulb **114b** may also move along a direction as indicated by arrow **164.** The CO₂ laser **150** and the focal spot **154** on the surface of the glass bulb **114b** are fixed while the glass bulb **114b** moves and rotates, which results in a relative move of the focal spot **154** along the direction of spiral three dimensional separation path **112** at a speed determined by the rotating speed of the rod **160** and the moving speed of the glass bulb **114b.** For instance, the relative moving speed of the focal spot **154** may be from about 20 mm/s to about 60 mm/s. The distance L₃ between the focal spot **154** and the outer edge of the glass bulb **114b** defines the width of the glass sheet **114a,** and may be substantially constant during the cutting. The CO₂ laser **150** may also be positioned at an angle or pitch relative to the glass such that the glass sheet **114a** is spirally cut from the cylindrical shaped portion **111** of the glass bulb **114b.** The pitch may be set by adjusting the angular orientation of the cutting device with respect to the glass bulb **114b.** The pitch of the CO₂ laser **150,** in conjunction with the rotating speed of the rod **160,** determines the width L₃ of the glass sheet **114a.**

In this embodiment, the laser beam **152** of the CO₂ laser **150** may be directed on to the cylindrical shaped portion **111** of the glass bulb **114b** with sufficient power to separate the glass sheet **114a** from the glass bulb **114b** along the direction of the separation path **112.** As the glass bulb **114b** continues rotating and moving, the cutting of the glass sheet **114a** propagates along the direction of the separation path **112,** and thus, results in an increase of the length of the cut glass sheet **114a.** The heating of the CO₂ laser **150** along the separation path **112** creates the thermal affected zones (shown in **FIGS. 1** and **2**), generally being about 1mm in width, on either side of the separation path **112.** The high thermal stresses induced in the glass by the CO₂ laser **150** may cause cracks to develop and propagate in the glass directly adjacent to the thermal affected zone and parallel to the separation path **112.** The cracks cause the thermal affected zone to separate from the remainder of the glass (i.e. from the glass bulb **114b** and glass sheet **114a**), as shown in **FIG. 1C**, leaving clean edges on each of the glass bulb **114b** and the glass sheet **114a.**

It will be apparent to those skilled in the art that various modifications and variations can be made to the present disclosure without departing from the scope of the invention. Thus, it is intended that the present invention cover the modifications and variations of this disclosure provided they come within the scope of the appended claims.

## Claims

1. A method for cutting a fragile glass material (10) having a thickness of equal to or less than 150 µm and a coefficient of thermal expansion from 10 to 70 x 10⁻⁷/K between 25-300 °C, the method comprising the steps of:
heating the fragile glass material with a laser (50) along a separation path (12) at a speed from 20 mm/s to 60 mm/s to separate the fragile material into a first portion (14a) and a second portion (14b), wherein at least the first portion includes a first thermal affected zone (16a) extending along the separation path, wherein the laser (50) has a power from about 50 W to about 150 W during the step of heating; and
spontaneously splitting at least part of the first thermal affected zone from the remainder of the first portion along a first split path (18a) extending a first distance (L₁) from the separation path, wherein the spontaneous splitting occurs as a consequence of the step of heating the fragile material such that sufficient internal stresses are created within the first portion (14a) to facilitate the spontaneous generation and propagation of the first crack (21a).

2. The method of claim 1, wherein the step of splitting provides the first portion (14a) with a first clean edge (22a) extending along the first split path (18a).

3. The method of claim 1, wherein the step of splitting includes propagating a first crack along the first split path (18a).

4. The method of claim 1, wherein the first distance (L₁) is constant along the separation path (12).

5. The method of claim 1, wherein the second portion (14b) includes a second thermal affected zone (16b) extending along the separation path (12).

6. The method of claim 5, further comprising the step of spontaneously splitting at least part of the second thermal affected zone (16b) from the remainder of the second portion (14b) along a second split path (18b) extending a second distance (L₂) from the separation path (12), wherein the spontaneous splitting of at least part of the second thermal affected zone (16b) occurs as a consequence of the step of heating the fragile material (10).

7. The method of claim 6, wherein the first distance (L₁) is equal to the second distance (L₂).

8. The method of claim 1, wherein the laser (50) emits a wavelength between 10 µm and 11 µm.

9. The method of claim 1, wherein the step of heating is modified to accommodate changes in thickness of the fragile material (10).

## Patentansprüche

1. Verfahren zum Schneiden eines fragilen Glasmaterials (10), das eine Stärke von gleich oder weniger als 150 µm und einen Wärmeausdehnungskoeffizienten von 10 bis 70 x 10⁻⁷/K zwischen 25-300 °C aufweist, wobei das Verfahren die folgenden Schritte beinhaltet:
Erwärmen des fragilen Glasmaterials mit einem Laser (50) entlang einem Trennweg (12) mit einer Geschwindigkeit von 20 mm/s bis 60 mm/s, um das fragile Material in einen ersten Abschnitt (14a) und einen zweiten Abschnitt (14b) zu trennen, wobei mindestens der erste Abschnitt eine erste thermisch beeinflusste Zone (16a) umfasst, die sich entlang dem Trennweg erstreckt, wobei der Laser (50) während des Schritts des Erwärmens eine Leistung von etwa 50 W bis etwa 150 W aufweist; und
spontanes Abspalten von mindestens einem Teil der ersten thermisch beeinflussten Zone vom Rest des ersten Abschnitts entlang einem ersten Spaltweg (18a), der sich eine erste Distanz (L₁) vom Trennweg erstreckt, wobei das spontane Abspalten als Folge des Schritts des Erwärmens des fragilen Materials auf eine Weise auftritt, dass ausreichende interne Spannungen innerhalb des ersten Abschnitts (14a) erzeugt werden, um die spontane Generierung und Ausbreitung des ersten Risses (21a) zu erleichtern.

2. Verfahren gemäß Anspruch 1, wobei der Schritt des Abspaltens dem ersten Abschnitt (14a) eine erste saubere Kante (22a) bereitstellt, die sich entlang dem ersten Spaltweg (18a) erstreckt.

3. Verfahren gemäß Anspruch 1, wobei der Schritt des Abspaltens das ausbreiten eines ersten Risses entlang dem ersten Spaltweg (18a) umfasst.

4. Verfahren gemäß Anspruch 1, wobei die erste Distanz (L₁) entlang dem Trennweg (12) konstant ist.

5. Verfahren gemäß Anspruch 1, wobei der zweite Abschnitt (14b) eine zweite thermisch beeinflusste Zone (16b) umfasst, die sich entlang dem Trennweg (12) erstreckt.

6. Verfahren gemäß Anspruch 5, das ferner den Schritt des spontanen Abspaltens von mindestens einem Teil der zweiten thermisch beeinflussten Zone (16b) vom Rest des zweiten Abschnitts (14b) entlang einem zweiten Spaltweg (18b), der sich eine zweite Distanz (L₂) vom Trennweg (12) erstreckt, beinhaltet, wobei das spontane Abspalten von mindestens einem Teil der zweiten thermisch beeinflussten Zone (16b) als Folge des Schritts des Erwärmens des fragilen Materials (10) auftritt.

7. Verfahren gemäß Anspruch 6, wobei die erste Distanz (L₁) gleich der zweiten Distanz (L₂) ist.

8. Verfahren gemäß Anspruch 1, wobei der Laser (50) eine Wellenlänge zwischen 10 µm und 11 µm emittiert.

9. Verfahren gemäß Anspruch 1, wobei der Schritt des Erwärmens modifiziert wird, um Änderungen der Stärke des fragilen Materials (10) aufzunehmen.

## Revendications

1. Méthode de coupe d'un matériau de verre fragile (10) dont l'épaisseur est égale ou inférieure à 150 µm, et présentant un coefficient d'expansion thermique allant de 10 à 70 x 10⁻⁷/K, entre 25 et 300 °C, la méthode comprenant les étapes suivantes :
chauffage au laser (50) du matériau de verre fragile le long d'un trajet de séparation (12) à une vitesse allant de 20 mm/s à 60 mm/s pour séparer le matériau fragile en une première partie (14a) et une deuxième partie (14b), au moins la première partie comprenant une première zone affectée thermiquement (16a) s'étendant le long du trajet de séparation, la puissance du laser (50) au cours de l'étape de chauffage étant comprise entre environ 50 W et environ 150 W ; et
oeuvrant la division spontanée d'au moins une partie de la première zone affectée thermiquement du restant de la première partie le long d'un premier trajet divisé (18a) s'étendant sur une première distance (L₁) depuis le trajet de séparation, la division spontanée se produisant en raison de l'étape de chauffage du matériau fragile de façon à créer des contraintes internes suffisantes au sein de la première partie (14a) pour faciliter la génération spontanée et la propagation de la première fissure (21a).

2. Méthode selon la revendication 1, l'étape de division donnant à la première partie (14a) un premier bord net (22a) s'étendant le long du premier trajet divisé (18a).

3. Méthode selon la revendication 1, l'étape de division comprenant la propagation d'une première fissure le long du premier trajet divisé (18a).

4. Méthode selon la revendication 1, la première distance (L₁) étant constante le long du trajet de séparation (12).

5. Méthode selon la revendication 1, la deuxième partie (14b) comprenant une deuxième zone affectée thermiquement (16b) s'étendant le long du trajet de séparation (12).

6. Méthode selon la revendication 5, comprenant en outre l'étape de division spontanée d'au moins une partie de la deuxième zone affectée thermiquement (16b) du restant de la deuxième partie (14b) le long d'un deuxième trajet divisé (18b) s'étendant sur une deuxième distance (L₂) depuis le trajet de séparation (12), la division spontanée d'au moins une partie de la deuxième zone affectée thermiquement (16b) se produisant en conséquence de l'étape de chauffage du matériau fragile (10).

7. Méthode selon la revendication 6, la première distance (L₁) étant égale à la deuxième distance (L₂).

8. Méthode selon la revendication 1, le laser (50) émettant une longueur d'onde comprise entre 10 µm and 11 µm.

9. Méthode selon la revendication 1, l'étape de chauffage étant modifiée pour tenir compte de variations de l'épaisseur du matériau fragile (10).
